# FASCICULE DE BREVET EUROPEEN

(11) **EP 2 191 723 B1**
(45) Date de publication et mention de la délivrance du brevet: **01.04.2015**
(21) Numéro de dépôt: 09176282.3
(22) Date de dépôt: 18.11.2009
(51) Int. Cl.: A21D 10/00, A21D 13/00

(54) **Fond de tarte à barrière contre les transferts d'eau et procédé de fabrication associé**
Kuchenboden mit Dämmung der Feuchtigkeitsübertragung und damit verbundene Hestellungsverfahren
Cake base with barrier against migration of water and associated production processes

(30) Priorité: 20.11.2008 FR 0857889
(43) Date de publication de la demande: 02.06.2010
(73) Titulaire: Martine Specialites, 24530 Champagnac de Belair (FR)
(72) Inventeur: Corlay, Frank, 24570 Boulazac (FR); Houzelstein, Florence, 24640 Cubjac (FR)
(74) Mandataire: Schmit, Christian Norbert Marie

(56) Documents cités:
- WO-A-95/07025
- WO-A-96/11577
- US-A- 5 145 699
- US-A1- 2006 024 416
- Dalon L: "flammekueche et autres tartes alsaciennes" 2006, Dormonval , Lucerne - CH , XP002566901 ISBN: 3905461749 , pages 6-7 * page 7 *

## Description

La présente invention concerne un fond de tarte à barrière contre les transferts d'eau et son procédé de fabrication.

Les fonds de tartes en pâtisserie sont fréquemment réalisés en pâte de type pâte sablée. Le terme fond de tarte est connu en pâtisserie pour désigner l'ensemble de la couche de pâte y compris ses bords relevés.

La pâte sablée a pour inconvénient de rapidement absorber l'humidité et l'eau contenue dans les fruits disposés sur le fond.

De ce fait, les produits de tarterie fraîche et surgelée voient leurs qualités sensorielles se dégrader rapidement après leur mise en rayon. Parmi les évolutions, il est fréquent d'observer déjà après quelques heures, une reprise d'humidité des fonds de tarte sablés.

C'est aussi parfois le résultat d'un stockage en conditions surgelées de plusieurs mois. Cette humidité provient principalement des fruits déposés et/ou du type de garniture utilisé. Le transfert d'eau est favorisé puisque qu'il existe un gradient d'humidité entre les pâtes sablées à faible teneur en eau et les garnitures et/ou fruits dont les teneurs en eau sont plus élevées.

Des barrières de protection de fonds de tartes contre les transferts d'eau de types matière grasse, pectine, gel protéique, cires alimentaires ou autres existent.

Toutefois les fonds de pâte sablée présentent souvent une surface ayant des reliefs et les barrières connues n'épousent pas correctement ces reliefs ce qui offre autant de points d'entrée à l'eau ou l'humidité lors de l'utilisation de telles barrières.

En outre les barrières connues tiennent difficilement sur les bords inclinés ou verticaux de la tarte et donc, ne protègent pas cette partie du fond de tarte.

De plus, les types de barrières existants ne peuvent pas toujours être utilisés, comme dans le cas des fonds commercialisés crus où la barrière perd son efficacité lors de la cuisson de la tarte.

L'invention vise à proposer un dispositif barrière pour fond de tarte, adapté à au moins retarder les transferts d'eau et d'humidité vers la pâte du fond quelque-soit le type de garniture et de fruits utilisés, qui épouse parfaitement la forme du support de pâte sur lequel il est déposé, qui s'applique sur les bords de la tarte, qui convient à tous les cas d'utilisation et qui ne modifie pas de manière substantielle le goût de la tarte, notamment dans le cas d'une tarte à pâte sablée.

Pour ce faire la présente invention prévoit un fond de tarte comprenant une barrière contre les transferts d'eau depuis une garniture vers le fond de tarte **caractérisé en ce que** la barrière contre les transferts d'eau comprend une couche de pâte contenant de la matière grasse et dépourvue de sucre déposée sur la pâte du fond.

L'invention est décrite aux revendications 1 à 16.

Préférablement, la couche de pâte comprend principalement de la farine, de la matière grasse, de l'eau et du sel et avantageusement comprend de l'oeuf.

La couche de pâte formant barrière est de type pâte brisée.

Plus généralement, ladite couche de pâte formant barrière aux transferts d'eau est organisée en réseau protéique continu dont les espaces libres sont principalement occupés par de la matière grasse.

Selon un mode de réalisation avantageux, ladite couche de pâte formant barrière est déposée sur la pâte du fond de tarte selon un rapport en masse entre ¼ couche de pâte barrière ¾ couche de pâte du fond et ½ couche de pâte barrière ½ couche de pâte du fond et préférentiellement d'environ 1/3 couche de pâte barrière, 2/3 couche de pâte du fond.

Ladite couche de pâte formant barrière est préférentiellement d'une épaisseur de l'ordre de 0,3 à 2 mm.

Préférablement, ladite couche de pâte formant barrière remonte sur les bords du fond de tarte et recouvre le sommet des bords du fond.

Selon un mode de réalisation préférentiel, la pâte du fond est une pâte sablée.

Selon un mode de réalisation particulier de l'invention, le fond comprend des empreintes d'un piquage.

L'invention s'applique à une tarte comprenant un fond selon l'invention et une garniture.

Elle prévoit un procédé de fabrication d'un fond de tarte à barrière contre les transferts d'eau pour lequel on prépare un pâton de réalisation de la pâte du fond on prépare une pastille de réalisation de la couche de pâte formant barrière contre les transferts d'eau, on étale le pâton, on applique la pastille sur le pâton étalé et on étale la pastille sur le pâton.

Alternativement, elle prévoit un procédé de fabrication d'un fond de tarte à barrière contre les transferts d'eau pour lequel on prépare un pâton de réalisation de la pâte du fond on prépare une pastille de réalisation de la couche de pâte formant barrière contre les transferts d'eau, on applique la pastille sur le pâton et on étale le pâton et la pastille en une opération unique.

Avantageusement on forme le fond dans une empreinte de moule.

Selon le procédé de l'invention on cuit ensemble le fond et la couche de pâte étalée sur le fond et on réalise préférablement un piquage de la couche de pâte et du fond avant cuisson.

Selon un mode de réalisation particulier, on réalise le piquage selon un pas de l'ordre de 3 à 5 mm sur la partie plane du fond de tarte.

Selon un mode de réalisation alternatif ou complémentaire, on réalise le piquage selon un pas de l'ordre de 1 à 3 mm sur les bords relevés du fond de tarte.

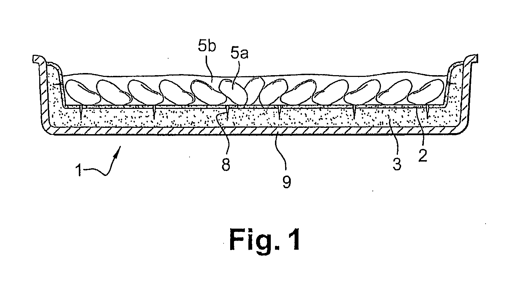

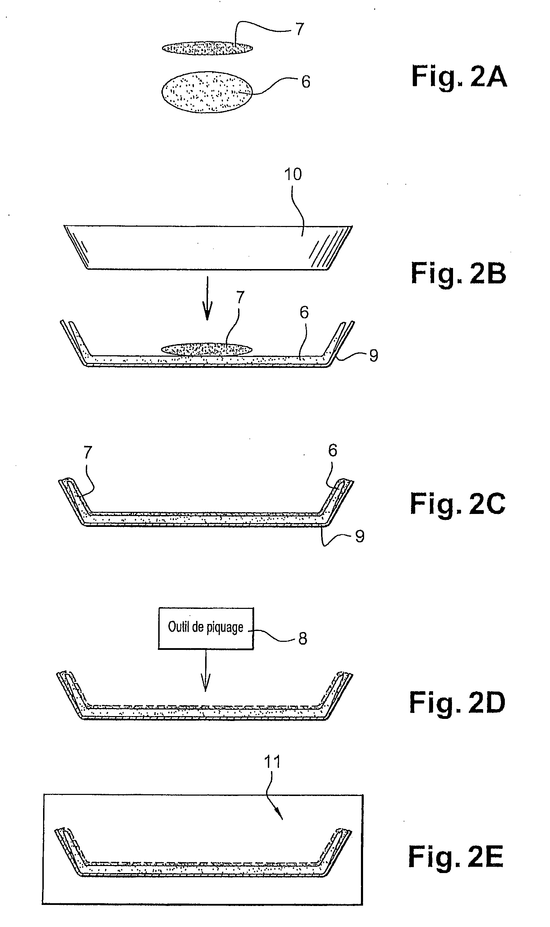

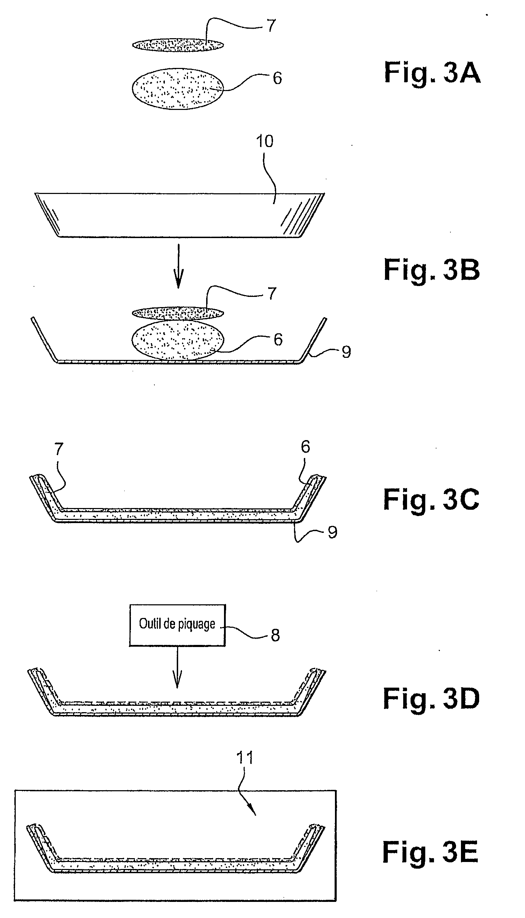

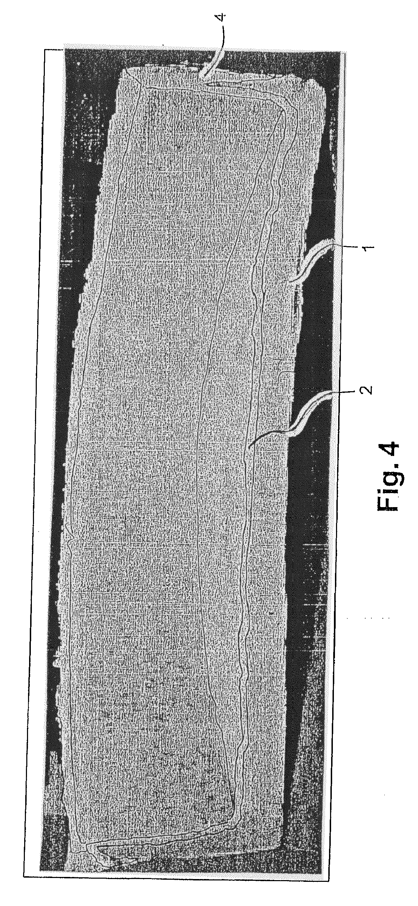

D'autres caractéristiques et avantages de l'invention sont illustrés par la description qui suit d'un exemple non limitatif de réalisation de l'invention en référence aux dessins qui représentent:
en figure 1: une vue schématique en coupe d'une tarte comprenant un fond selon l'invention;
aux figures 2A à 2E: une séquence de réalisation d'un fond de tarte selon une première variante d'un procédé selon l'invention;
aux figures 3A à 3E: une séquence de réalisation d'un fond de tarte selon une seconde variante d'un procédé selon l'invention;
en figure 4: une photo d'une coupe de fond de tarte selon l'invention;

Comme vu précédemment, la présente invention vise à créer une barrière efficace aux transferts d'eau et d'humidité vers le fond d'une tarte quel que soit le type de garniture ou de fruits utilisé.

Le problème des tartes et en particulier des tartes à pâte sablée est que le sucre ayant des propriétés hydrophiles, les cristaux de sucre sont les premiers ponts permettant l'entrée de l'eau dans les pâtes sablées. En outre, les cristaux de sucre dans la pâte facilitent les transferts d'eau.

Par contre le sucre est évidemment un élément essentiel pour le goût des pâtisseries et en particulier des tartes à base de pâtes sablées.

Partant de cette analyse la présente invention est basée sur l'utilisation des propriétés barrières d'une pâte contenant de la matière grasse mais ne contenant pas de sucre.

Afin de bloquer l'entrée de l'eau, La présente invention prévoit de recouvrir une pâte hydrophile telle qu'une pâte sablée par une couche d'une pâte protectrice contre les transferts d'eau.

La figure 1 schématise une tarte disposée dans un moule 9.

Elle comprend selon l'invention un fond de tarte 1 pourvu d'une couche barrière adaptée à s'opposer aux transfert d'eau dans le fond de tarte. La couche barrière comprend une couche de pâte 2 formant barrière contre les transferts d'eau contenant de la matière grasse et dépourvue de sucre déposée sur la pâte 3 du fond et une garniture 5a, 5b.

Cette couche barrière protège le fond des transferts d'eau provenant des garnitures 5a, 5b.

L'intérêt de ce type de barrière plutôt que des barrières classiques types matière grasse, pectine, gel protéique, cires alimentaires ou autre réside en sa capacité à épouser parfaitement la forme du support de pâte sablée sur lequel elle est déposée.

En effet, les fonds de pâte sablée ont souvent des surfaces granuleuses ou à reliefs ce qui offre autant de points d'entrée à l'eau lors de l'utilisation de barrières classiques. Ceci est particulièrement problématique dans le cas des fonds de tarte surgelés cuits qui ont une rugosité importante.

De plus, la barrière de la présente invention peut s'appliquer sur les bords de la tarte, ce qui lui confère là aussi un avantage vis à vis des barrières classiques qui ont une tendance naturelle à s'écouler et à ne pas protéger les bords.

Ces mêmes barrières ne s'appliquent pas dans tous les cas d'utilisation des fonds de tartes notamment en fonction du fait que les garnitures sont déposées avant ou après cuisson du fond, à l'inverse du fond de la présente invention qui s'applique à tous les cas d'utilisation et est déposée avant cuisson du fond.

La quantité nécessaire de barrière, pour un fond réalisé selon l'invention pour lequel la couche de pâte 2 formant barrière contre les transferts d'eau est déposée sur la pâte 3 du fond de tarte, correspond à un rapport en masse avant cuisson entre ¼ couche de pâte barrière pour ¾ couche de pâte du fond et ½ couche de pâte barrière pour½ couche de pâte du fond.

La précision du rapport de masses est bien entendu soumise aux approximations d'usage dans le domaine des préparations culinaires.

La limite basse du rapport en masse varie en fonction des diamètres et des poids de fond de tarte souhaités.

Elle correspond au rapport minimal permettant de conserver l'intégrité de la couche barrière. Celle-ci ne doit pas se déchirer et doit recouvrir de manière continue et homogène la couche de pâte sablée.

La limite haute n'est pas définie par un aspect technique. Elle correspond au rapport maximal permettant de conserver les caractéristiques organoleptiques de la pâte sablée.

Le rapport est ainsi préférentiellement d'environ 1/3 couche de pâte barrière, 2/3 couche de pâte du fond ce dernier rapport permettant au mieux de conserver les qualités sensorielles originelles d'un fond de pâte sablée et notamment son croustillant et son goût sucré.

A titre d'exemple, ce rapport a été expérimenté pour des fonds de diamètres variés:

| **Diamètre de tarte (cm)** | **Masse de pâte sablée (g)** | **Masse de couche barrière (g)** | **Masse total (g)** |
|---|---|---|---|
| 8,5 | 20 | 10 | 30 |
| 10 | 33 | 17 | 50 |
| 22 | 147 | 73 | 220 |
| 24 | 167 | 83 | 250 |
| | 147 | 73 | 220 |
| 27 | 233 | 117 | 350 |

Ce rapport donne une bonne efficacité à la couche barrière tout en conservant au fond des qualités sensorielles correctes et suffisamment proches de celles d'une pâte sablée sans couche barrière.

Si l'on considère l'épaisseur de la couche barrière on a déterminé qu'en final après formation du fond, une couche de pâte formant barrière d'une épaisseur de l'ordre de 0,3 à 2 mm permet de préserver la croustillance pendant environ 48 heures après remplissage du fond avec la garniture même avec des fruits rendant beaucoup d'eau ou après décongélation pour des pâtes commercialisées congelées ce qui est amplement suffisant.

La limite basse de la fourchette correspond à une épaisseur minimale pour ne pas avoir de rupture ou de déchirement de la couche barrière dans le cas d'une une pâte comportant peu de rugosité. Cette limite basse peut devoir être relevée dans des cas où un risque de rupture de la couche barrière existe.

La couche de pâte 2 formant barrière est avant tout une couche ne comportant pas de sucre.

Pour une préparation améliorée la couche barrière est préférablement une pâte de type pâte brisée et comprend dans ce cas principalement de la farine, de la matière grasse, de l'eau, de l'oeuf et du sel.

La couche de pâte 2 formant barrière aux transferts d'eau est notamment une pâte organisée en réseau protéique continu dont les espaces libres sont principalement occupés par de la matière grasse.

Cette organisation moléculaire lui confère la propriété d'être une barrière très efficace en créant une interface à dominante hydrophobe entre la garniture et la pâte sablée.

La couche barrière joue également le rôle de couche tampon entre la garniture et la pâte sablée. L'eau ou l'humidité provenant de la garniture est d'abord pompée par la couche barrière ce qui retarde ainsi son transfert vers la pâte sablée du fond.

Sur la figure 4, correspondant à une photo d'une coupe de fond de tarte selon l'invention, on a identifié par un trait la séparation entre la couche de pâte du fond 1 et la couche barrière 2. Cette photo permet d'illustrer le fait que les épaisseurs données pour la couche barrière sont approximatives du fait des matières employées, une tolérance de 10 à 20% sur les limites données restant dans le cadre de l'invention.

La couche barrière 2 remonte sur les bords relevés 4 du fond de tarte et recouvre le sommet des bords du fond pour protéger les bords et leurs sommets de la reprise d'humidité.

Les figures 2A à 2F représentent schématiquement les étapes d'un procédé de réalisation d'un fond de tarte à barrière contre les transferts d'humidité de l'invention selon une première méthode applicable notamment lorsque le pâton de la pâte du fond de tarte est sous forme d'une pastille.

Selon la figure 2A on prépare un pâton 6 de réalisation de la pâte 3 du fond et on prépare une pastille 7 qui va devenir la couche de pâte formant barrière.

On étale le pâton 6 par des moyens connus tels qu'une presse 10 dans un moule 9 et, comme représenté en figure 2B, on applique la pastille 7 sur le pâton étalé et on étale la pastille 7 sur le pâton au moyen d'une presse telle qu'utilisée pour le pâton.

Le fond comportant la couche barrière et la couche de fond qui est représenté en figure 2C est cuit dans un four 11 selon la figure 2E.

Préalablement à la cuisson on réalise un piquage 8 de la couche de pâte et du fond avant cuisson représenté à la figure 2D.

Ce piquage évite d'avoir un décollement entre la couche formant barrière et la pâte du fond pendant la cuisson en laissant échapper l'humidité de la couche de fond au travers de la couche barrière.

Le piquage 8 est avantageusement réalisé selon un pas de l'ordre de 3 à 5 mm sur la partie plane du fond de tarte et préférablement selon un pas de l'ordre de 1 à 3 mm sur les bords relevés 4 du fond de tarte.

Les trous du piquage se referment lors de la cuisson et laissent éventuellement des empreintes.

Le mode de réalisation décrit aux figures 3A à 3E diffère de celui des figures 2A à 2E en ce qu'on prépare un pâton 6 de réalisation de la pâte 3 du fond, on prépare une pastille 7 de réalisation de la couche de pâte formant barrière aux transferts d'eau comme représenté en figure 3A mais, comme représenté en figure 3B, on applique la pastille 7 sur le pâton non étalé et on étale l'ensemble en une seule opération au moyen d'une presse 10 dans le moule 9.

Le pâton 6 et la pastille 7 étalés ensemble sont représentés à la figure 3C.

La suite de la fabrication du fond de tarte représentée aux figures 3D et 3E est identique à la méthode décrite aux figures 2D et 2E.

Pour cette méthode, il est préférable que l'on forme la pastille à un diamètre proche de celui du pâton pour obtenir lors du pressage un fluage de la pastille au dessus des bords du fond.

Autrement dit, dans le mode de réalisation décrit aux figures 3A à 3E, la surface vue du dessus de la pastille est proche voir identique à celle du pâton 6 comme représenté en figure 3A. Comme représenté en figure 3B, on applique alors la pastille 7 sur le pâton non étalé et on étale ensuite le pâton 6 et la pastille 7 en une opération unique. Cette méthode est bien adaptée à la réalisation d'un fond de tarte pour lequel la couche barrière recouvre la pâte sablée sur tout le fond de tarte y compris sur les bords relevés de la tarte comme représenté en figure 3C.

Cette dernière méthode préférée trouve son intérêt en particulier lorsque le pâton est réalisé par découpe à partir d'une bande de pâte.

Un avantage de l'invention est que la barrière réalisée sur la pâte du fond crue garde son efficacité lors de la cuisson, que ce soit lors de la cuisson du fond seul avant la pose de la garniture ou que ce soit lors de la cuisson du fond garni dans le cas par exemple des fonds commercialisés crus, surgelés ou non, auprès de grandes surfaces qui procèdent à leur garnissage ultérieurement pour la vente au public.

## Revendications

1. Fond de tarte (1) comprenant une barrière contre les transferts d'eau depuis une garniture (5a, 5b) vers le fond de tarte (1) dans lequel la pâte du fond (3) est une pâte sablée, la barrière contre les transferts d'eau comprend une couche de pâte brisée (2) formant barrière et la barrière contre les transfers est dépourvue de sucre.

2. Fond de tarte (1) selon la revendication 1 **caractérisé en ce que** la couche de pâte (2) comprend principalement de la farine, de la matière grasse, de l'eau et du sel.

3. Fond de tarte (1) selon la revendication 1 ou 2 **caractérisé en ce que** la couche de pâte (2) formant barrière comprend de l'oeuf.

4. Fond de tarte (1) selon l'une quelconque des revendications précédentes **caractérisé en ce que** ladite couche de pâte (2) formant barrière aux transferts d'eau est organisée en réseau protéique continu dont les espaces libres sont principalement occupés par de la matière grasse.

5. Fond de tarte (1) selon l'une quelconque des revendications précédentes **caractérisé en ce que** ladite couche de pâte (2) formant barrière est déposée sur la pâte (3) du fond de tarte selon un rapport en masse entre 1/4 couche de pâte (2) barrière 3/4 couche de pâte (3) du fond et 1/2 couche de pâte (2) barrière 1/2 couche de pâte (3) du fond et préférentiellement d'environ 1/3 couche de pâte (2) barrière, 2/3 couche de pâte (3) du fond.

6. Fond de tarte (1) selon l'une quelconque des revendications précédentes **caractérisé en ce que** ladite couche de pâte (2) formant barrière est d'une épaisseur de l'ordre de 0,3 à 2 mm.

7. Fond de tarte (1) selon l'une quelconque des revendications précédentes **caractérisé en ce que** ladite couche de pâte (2) formant barrière remonte sur les bords du fond de tarte (1) et recouvre le sommet des bords du fond.

8. Fond de tarte selon l'une quelconque des revendications précédentes **caractérisé en ce qu'**il comprend des empreintes d'un piquage.

9. Tarte comprenant un fond (1) selon l'une quelconque des revendications précédentes et une garniture (5a, 5b).

10. Procédé de fabrication d'un fond de tarte (1) à barrière contre les transferts d'eau selon l'une quelconque des revendications 1 à 8 **caractérisé en ce que** on prépare un pâton (6) de réalisation de la pâte (3) du fond on prépare une pastille (7) de réalisation de la couche de pâte formant barrière contre les transferts d'eau, on étale le pâton (6), on applique la pastille (7) sur le pâton étalé et on étale la pastille (7) sur le pâton.

11. Procédé de fabrication d'un fond de tarte (1) à barrière contre les transferts d'eau selon l'une quelconque des revendications 1 à 8 **caractérisé en ce que** on prépare un pâton (6) de réalisation de la pâte (3) du fond on prépare une pastille (7) de réalisation de la couche de pâte formant barrière contre les transferts d'eau, on applique la pastille (7) sur le pâton et on étale le pâton (6) et la pastille (7) en une opération unique.

12. Procédé de fabrication d'un fond de tarte (1) à barrière contre les transferts d'eau selon la revendication 10 ou 11 **caractérisé en ce que** l'on forme le fond dans une empreinte de moule (9).

13. Procédé de fabrication d'un fond de tarte (1) à barrière contre les transferts d'eau selon l'une quelconque des revendications 10 à 12 **caractérisé en ce que** l'on cuit ensemble le fond et la couche de pâte étalée sur le fond.

14. Procédé de fabrication d'un fond de tarte (1) à barrière contre les transferts d'eau selon la revendication 13 **caractérisé en ce qu'**on réalise un piquage (8) de la couche de pâte et du fond avant cuisson.

15. Procédé de fabrication d'un fond de tarte (1) à barrière contre les transferts d'eau selon la revendication 14 **caractérisé en ce qu'**on réalise le piquage (8) selon un pas de l'ordre de 3 à 5 mm sur la partie plane du fond de tarte.

16. Procédé de fabrication d'un fond de tarte (1) à barrière contre les transferts d'eau selon la revendication 14 ou 15 **caractérisé en ce qu'**on réalise le piquage (8) selon un pas de l'ordre de 1 à 3 mm sur les bords relevés (4) du fond de tarte.

## Patentansprüche

1. Kuchenboden (1), umfassend eine Dämmung gegen die Feuchtigkeitsübertragung von einem Belag (5a, 5b) zum Kuchenboden (1), wobei der Bodenteig (3) ein Knetteig ist, die Dämmung gegen die Feuchtigkeitsübertragung eine Schicht aus Mürbteig (2) umfasst, die eine Dämmung bildet, und die Dämmung gegen die Übertragung zuckerfrei ist.

2. Kuchenboden (1) nach Anspruch 1, **dadurch gekennzeichnet, dass** die Teigschicht (2) hauptsächlich Mehl, Fett, Wasser und Salz umfasst.

3. Kuchenboden (1) nach Anspruch 1 oder 2, **dadurch gekennzeichnet, dass** die Teigschicht (2), die die Dämmung bildet, Ei umfasst.

4. Kuchenboden (1) nach einem der vorhergehenden Ansprüche, **dadurch gekennzeichnet, dass** die Teigschicht (2), die die Dämmung gegen Feuchtigkeitsübertragung bildet, als kontinuierliches Proteinnetzwerk organisiert ist, dessen freie Räume hauptsächlich von Fett belegt sind.

5. Kuchenboden (1) nach einem der vorhergehenden Ansprüche, **dadurch gekennzeichnet, dass** die Teigschicht (2), die die Dämmung bildet, auf dem Kuchenbodenteig (3) in einem Masseverhältnis zwischen 1/4 Dämmungsteigschicht (2) 3/4 Bodenteigschicht (3) und 1/2 Dämmungsteigschicht (2) 1/2 Bodenteigschicht (3) und vorzugsweise etwa 1/3 Dämmungsteigschicht (2), 2/3 Bodenteigschicht (3) aufgetragen wird.

6. Kuchenboden (1) nach einem der vorhergehenden Ansprüche, **dadurch gekennzeichnet, dass** die Teigschicht (2), die die Dämmung bildet, eine Dicke in der Größenordnung von 0,3 bis 2 mm aufweist.

7. Kuchenboden (1) nach einem der vorhergehenden Ansprüche, **dadurch gekennzeichnet, dass** die Teigschicht (2), die die Dämmung bildet, an den Rändern des Kuchenbodens (1) nach oben geht und die Oberkante der Bodenränder bedeckt.

8. Kuchenboden nach einem der vorhergehenden Ansprüche, **dadurch gekennzeichnet, dass** er Einstichabdrücke umfasst.

9. Kuchen, umfassend einen Boden (1) nach einem der vorhergehenden Ansprüche und einen Belag (5a, 5b).

10. Verfahren zur Herstellung eines Kuchenbodens (1) mit Dämmung gegen Feuchtigkeitsübertragung nach einem der Ansprüche 1 bis 8, **dadurch gekennzeichnet, dass** ein Teigling (6) zur Herstellung des Bodenteigs (3) hergestellt wird, dass ein Oblatenstück (7) zur Herstellung der Teigschicht, die die Dämmung gegen die Feuchtigkeitsübertragung bildet, hergestellt wird, dass der Teigling (6) ausgelegt wird, dass das Oblatenstück (7) auf den ausgelegten Teigling aufgebracht wird und dass das Oblatenstück (7) auf dem Teigling ausgelegt wird.

11. Verfahren zur Herstellung eines Kuchenbodens (1) mit Dämmung gegen Feuchtigkeitsübertragung nach einem der Ansprüche 1 bis 8, **dadurch gekennzeichnet, dass** ein Teigling (6) zur Herstellung des Bodenteigs (3) hergestellt wird, dass ein Oblatenstück (7) zur Herstellung der Teigschicht, die die Dämmung gegen Feuchtigkeitsübertragung bildet, hergestellt wird, dass das Oblatenstück (7) auf den Teigling aufgebracht wird und dass der Teigling (6) und das Oblatenstück (7) in einem einzigen Vorgang ausgelegt werden.

12. Verfahren zur Herstellung eines Kuchenbodens (1) mit Dämmung gegen Feuchtigkeitsübertragung nach Anspruch 10 oder 11, **dadurch gekennzeichnet, dass** der Boden in einem Formhohlraum (9) geformt wird.

13. Verfahren zur Herstellung eines Kuchenbodens (1) mit Dämmung gegen Feuchtigkeitsübertragung nach einem der Ansprüche 10 bis 12, **dadurch gekennzeichnet, dass** der Boden und die auf dem Boden ausgelegte Teigschicht gemeinsam gebacken werden.

14. Verfahren zur Herstellung eines Kuchenbodens (1) mit Dämmung gegen Feuchtigkeitsübertragung nach Anspruch 13, **dadurch gekennzeichnet, dass** ein Einstechen (8) der Teigschicht und des Bodens vor dem Backen durchgeführt wird.

15. Verfahren zur Herstellung eines Kuchenbodens (1) mit Dämmung gegen Feuchtigkeitsübertragung nach Anspruch 14, **dadurch gekennzeichnet, dass** das Einstechen (8) in einem Abstand in der Größenordnung von 3 bis 5 mm auf dem flachen Teil des Kuchenbodens durchgeführt wird.

16. Verfahren zur Herstellung eines Kuchenbodens (1) mit Dämmung gegen Feuchtigkeitsübertragung nach Anspruch 14 oder 15, **dadurch gekennzeichnet, dass** das Einstechen (8) in einem Abstand in der Größenordnung von 1 bis 3 mm an den hochgezogenen Rändern (4) des Kuchenbodens durchgeführt wird.

## Claims

1. Pie base (1) comprising a barrier against migration of water from a filling (5a, 5b) to the pie base (1), in which the base pastry (3) is a sugar crust pastry, the barrier against migration of water comprises a layer of shortcrust pastry (2) forming a barrier and the barrier against migration of water is free of sugar.

2. Pie base (1) according to Claim 1, **characterized in that** the layer of pastry (2) comprises mainly flour, fat, water and salt.

3. Pie base (1) according to Claim 1 or 2, **characterized in that** the layer of pastry (2) forming a barrier comprises egg.

4. Pie base (1) according to any one of the preceding claims, **characterized in that** said layer of pastry (2) forming a barrier against migration of water is organized in a continuous protein network, the free spaces of which are mainly occupied by fat.

5. Pie base (1) according to any one of the preceding claims, **characterized in that** said layer of pastry (2) forming a barrier is deposited on the pastry (3) of the pie base according to a mass ratio between 1/4 barrier layer of pastry (2), 3/4 layer of base pastry (3) and 1/2 barrier layer of pastry (2), 1/2 layer of base pastry (3), and preferentially approximately 1/3 barrier layer of pastry (2), 2/3 layer of base pastry (3).

6. Pie base (1) according to any one of the preceding claims, **characterized in that** said layer of pastry (2) forming a barrier has a thickness of about 0.3 to 2 mm.

7. Pie base (1) according to any one of the preceding claims, **characterized in that** said layer of pastry (2) forming a barrier comes up over the edges of the pie base (1) and covers the top of the edges of the base.

8. Pie base according to any one of the preceding claims, **characterized in that** it comprises pricking impressions.

9. Pie comprising a base (1) according to any one of the preceding claims and a filling (5a, 5b).

10. Process for producing a pie base (1) with barrier against migration of water according to any one of Claims 1 to 8, **characterized in that** a pastry dough piece (6) for producing the base pastry (3) is prepared, a pellet (7) for producing the layer of pastry forming a barrier against migration of water is prepared, the pastry dough piece (6) is rolled out, the pellet (7) is applied to the rolled out pastry dough piece and the pellet (7) is rolled out on the pastry dough piece.

11. Process for producing a pie base (1) with barrier against migration of water according to any one of Claims 1 to 8, **characterized in that** a pastry dough piece (6) for producing the base pastry (3) is prepared, a pellet (7) for producing the layer of pastry forming a barrier against migration of water is prepared, the pellet (7) is applied to the pastry dough piece and the pastry dough piece (6) and the pellet (7) are rolled out in a single operation.

12. Process for producing a pie base (1) with barrier against migration of water according to Claim 10 or 11, **characterized in that** the base is formed in a mould impression (9).

13. Process for producing a pie base (1) with barrier against migration of water according to any one of Claims 10 to 12, **characterized in that** the base and the layer of pastry rolled out on the base are baked together.

14. Process for producing a pie base (1) with barrier against migration of water according to Claim 13, **characterized in that** pricking (8) of the layer of pastry and of the base is carried out before baking.

15. Process for producing a pie base (1) with barrier against migration of water according to Claim 14, **characterized in that** the pricking (8) is carried out according to a spacing of about 3 to 5 mm on the flat part of the pie base.

16. Process for producing a pie base (1) with barrier against migration of water according to Claim 14 or 15, **characterized in that** the pricking (8) is carried out according to a spacing of about 1 to 3 mm on the raised edges (4) of the pie base.
